# EUROPÄISCHE PATENTSCHRIFT

(11) **EP 0 541 902 B1**
(45) Veröffentlichungstag und Bekanntmachung des Hinweises auf die Patenterteilung: **22.02.1995**
(21) Anmeldenummer: 92111303.1
(22) Anmeldetag: 03.07.1992
(51) Int. Cl.: F16F 13/00

(54) **Gummilager**
Rubber mount
Support élastique

(30) Priorität: 15.11.1991 DE 4137602
(43) Veröffentlichungstag der Anmeldung: 19.05.1993
(73) Patentinhaber: Firma Carl Freudenberg, 69469 Weinheim (DE)
(72) Erfinder: Weltin, Uwe, Dr., W-6149 Rimbach (DE); Freudenberg, Tillman, Dr., W-6149 Fürth/Steinbach (DE); Freudenberg, Ulrich, Dr., W-6945 Hirschberg (DE)

(56) Entgegenhaltungen:
- WO-A-92/01876
- DE-A- 3 423 698
- DE-C- 3 918 753
- FR-A- 2 574 031
- FR-A- 2 599 799
- US-A- 1 991 952

## Beschreibung

Die Erfindung betrifft ein Gummilager gemäß Oberbegriff des Anspruchs 1.

Ein solches Gummilager ist aus der DE-OS 34 23 698 bekannt. In dem in der Fluidkammer enthaltenen Fluid werden mittels eines Schwingungselementes, das durch Magnetspulen aktivierbar ist, pulsierenden Druckschwankungen erzeugt. Mit Hilfe dieser Druckschwankungen kann man der statischen Einfederung des Lagers eine oszillierende Kontraktionsbewegung in axialer Richtung überlagern. Wird diese Bewegung nach Amplitude und Phasenlage auf von außen eingeleitete Schwingungen abgestimmt, so entsteht bezüglich dieser Schwingungen der Eindruck einer sich verringernden dynamischen Federrate des Lagers. Dabei ist allerdings zu beachten, daß die Magnetspulen zur Schwingungsisolierung abwechselnd angesteuert werden müssen, da die Spulen der Schwingungsisoliervorrichtung nur anziehende Kräfte erzeugen können. Die anziehenden Kräfte auf die Rückschlußplatte sind bei dieser Anordnung proportional zum Quadrat des Spulenstromes, so daß auch bei der geschilderten Betriebsweise ein sinusförmiger Kraftverlauf nur mit besonderen Entzerrungsmaßnahmen zu erreichen ist. Außerdem reagiert das System besonders empfindlich auf mechanische Toleranzfehler, da die beidseitigen Kräfte stark von der Spaltweite abhängen. In den gezeigten Vorrichtungen sind keine Vorkehrungen getroffen, um die Kompensationswand, die als Rückschlußplatte ausgebildet ist, in ihrer Ruhestellung in der Symmetrieebene in axialer Richtung zwischen den Magnetspulen zu halten.

Der Erfindung liegt die Aufgabe zugrunde, ein solches Gummilager derart weiter zu entwickeln, daß sich eine verbesserte Schwingungsisolierung akustisch störender Schwingungen ergibt, bei vergleichsweise einfachem Aufbau und einfacher Ansteuerung der Magnetspulen und daß mechanische Toleranzen einen wesentlich verringerten Einfluß auf die Gebrauchseigenschaften des Gummilagers haben wobei das Gummilager dadurch in wirtschaftlicher Hinsicht kostengünstiger herstellbar ist.

Außerdem soll ein Lager der eingangs genannten Art derart weiterentwickelt werden, daß die Linearitätseigenschaften der Anorndung verbessert werden, so daß ein sinusförmiges Stromsignal mit einem ebenfalls sinusförmigen, nur wenig verzerrten Kraftsignal beantwortet wird.

Diese Aufgaben werden erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager sind die Magnetspulen jeweils mit zumindest einer Gleich- und zumindest einem Wechselstrom beaufschlagbar und die axial einander gegenüberliegenden Magnetspulen sind entweder von den Gleichströmen oder von den Wechselströmen gegensinnig durchflossen. Ein derart ausgestaltetes Gummilager weist sehr gute Linearitätseigenschaften auf, so daß ein sinusförmiges Stromsignal mit einem ebenfalls nur sehr gering verzerrten sinusförmigen Kraftsignal beantwortet wird.

Gemäß einer vorteilhaften Ausgestaltung ist es vorgesehen, daß die Magnetspulen jeweils eine Gleich- und eine Wechselstromspule umfassen und daß entweder die beiden Gleichstromspulen oder die beiden Wechselstromspulen gegensinnig von Strom durchflossen sind. Es ist zweckmäßig, die beiden Gleich- und Wechselstromspulen jeweils in einer elektrischen Reihenschaltung zusammenzufassen. Prinzipiell kann aber auch jede Spule separat versorgt werden. Bei Aktivierung der Magnetspulen werden auf die Kompensationswand in axialer Richtung beiderseits anziehende Kräfte ausgeübt.

Zur Funktion ist folgendes auszuführen:
In Ruhestellung wird der Rückschlußbereich der Kompensationswand (Rückschlußplatte) bevorzugt durch eine Federung an eine mittlere Position im Spalt zwischen den beiden Magneten gebunden. Mit Hilfe der Gleichstromspulen werden die beiden Magnetkreise auf einen Arbeitspunkt des magnetischen Flusses vorbelastet, derart, daß sich die axialen Anziehungskräfte nach beiden Seiten hin aufheben. Erst durch einen Strom auf der Wechselstromspule wird diese Kraftsymmetrie aufgehoben. Versorgt man zur Schwingungsisolierung höherfrequenter Schwingungen die Wechselstromspulen mit einer Wechselspannung, so wird der jeweilige magnetische Fluß der beiden Magnetspulen mit der Frequenz der Wechselspannung moduliert, so daß eine hin- und hergehende Wechselkraft auf die Kompensationswand ausgeübt wird. Die Richtung der zu isolierenden Schwingungen entspricht weitgehend der Bewegungsrichtung der Kompensationswand bei Beaufschlagung mit der wechselstrombedingten Wechselkraft. Die erfindungsgemäße Differentialanordnung der Magnetspulen bewirkt, daß bei Beaufschlagung der Wechselstromspulen mit Wechselspannung die Kraft axial einerseits der Kompensationswand zunimmt und auf der axial gegenüberliegenden Seite der Kompensationswand in gleichem Maße abnimmt. Um diesen Effekt zu erzielen, ist es notwendig, daß die von Gleich- und Wechselstromspule erzeugten magnetischen Flüsse in dem einen Magnetkreis gleichgerichtet sind, während sie in dem anderen Magnetkreis entgegengerichtet sind.

Das erfindungsgemäße Gummilager zeichnet sich aus durch einen weitgehend linearen Zusammenhang von Magnetkraft und Strom auf der Wechselstromwicklung. Möglich wird dies, weil sich die resultierende Kraft auf die Kompensationswand als Differenz der anziehenden Kräfte der beidseitig angeordneten Magnete bildet. Hierbei kompensieren sich nicht nur die Kräfte durch den Gleichstrom, sondern es schwächen sich auch die Kraftanteile proportional zum Quadrat des Wechselstromes weitgehend. Betrachtet man insbesondere einen Zustand, in dem die Kompensationswand in der Ruhelage zwischen den einander gegenüberliegenden Magnetspulen festgehalten ist, so wirkt auf die Kompensationswand nur eine Kraft, die proportional zum Wechselstrom ist. Dieser lineare Kraftanteil wird beschrieben durch die Formel

F_{I} = k x N₁ x N₂ x I₁ x I₂ (1).

Hierbei bedeuten N₁ und I₁ Windungszahl und Strom der beiden Gleichstromspulen, die in beiden Magnetspulen als gleich angenommen sind; N₂ und I₂ beziehen sich auf die Wechselstromspule. Der Geometriefaktor k ist von der axialen Spaltweite beiderseits der Kompensationswand und den benachbart angeordneten Magnetspulen sowie der Spaltfläche abhängig.

Wie aus Formel (1) zu erkennen ist, kann die Größe der Wechselkraft mit Hilfe des Gleichstromes I₁ gesteuert werden. Das Verhalten des Gummilagers ist auch dann noch nahezu linear, wenn die Kompensationswand um die Auslenkung x aus der Mittellage ausgelenkt ist. Die Kraftanteile kompensieren sich zwar nicht mehr vollständig, jedoch sind die nichtlinearen Kraftanteile vernachlässigbar gering, solange die Auslenkung x gegenüber der Spaltweite sₒ klein bleibt. Die Linearität des Systems kann dadurch verbessert werden, daß die Wechselstromdurchflutung N₂ x I₂ deutlich unter dem Wert der Gleichstromdurchflutung N₁ x I_{I} bleibt.

Aus der Funktionsbeschreibung wird deutlich, daß die Ströme von Gleich- und Wechselstromspule in einem der Magneten gleichsinnig fließen müssen, damit sich die Magnetflüsse unterstützen, während sie im anderen Magneten gegensinnig fließen, so daß sich die Magnetflüsse gegenseitig abschwächen.

Nach einer vorteilhaften Ausgestaltung ist es vorgesehen, daß die Gleich- und Wechselstromwicklungen separat gewickelt sind. Zur Erzielung des entgegengesetzten Stromdurchflusses können entweder die beiden Gleichstromspulen oder die beiden Wechselstromspulen in entgegengesetzter Richtung gewickelt sein. In diesem Falle sind die Spulen als vier separate Formspulen ausgeführt, was den Vorteil hat, daß man bei der Wahl der Windungszahlen frei ist und dadurch besser auf die jeweiligen Gegebenheiten des Anwendungsfalles eingehen kann.

Darüber hinaus kann die Wechselstromwicklungen eine geringere Windungszahl aufweisen als die Gleichstromwicklungen. Durch diese Ausgestaltung wird eine niedrige Induktivität erreicht, wobei ein derart ausgestaltetes Gummilager eine besonders geringe elektrische Trägheit aufweist. Eine geringe elektrische Trägheit ist erwünscht, wenn bei einer gegebenen Maximalfrequenz eine vorgegebene Kraft mit möglichst wenig elektrischer Spannung erreicht werden soll.

Da bei der Gleichstromwicklung keine derartigen Forderungen an das dynamische Verhalten gestellt werden, ist es hier prinzipiell möglich, durch beispielsweise eine Vielzahl von Windungen mit dünnen Drähten sowohl die gewünschte statische Kraft einzustellen, als auch den passenden Ohm'schen Widerstand so anzupassen, daß die Gleichstromspule direkt an eine Gleichspannungsquelle angeschlossen werden kann.

Nach einer anderen Ausgestaltung ist es vorgesehen, daß entweder die beiden Gleich- oder die beiden Wechselstromspulen zur Erzielung des entgegengesetzten Stromdurchflusses mit untereinander vertauschten Anschlußklemmen versehen sind. Die Herstellung von im gleichen Richtungssinn gewickelten Gleichstromwicklungen und Wechselstromwicklungen, die zur Erzielung eines entgegengesetzten Stromdurchflusses allerdings dann mit untereinander vertauschten Anschlußklemmen versehen sind, bedingen eine besonders einfache und in wirtschaftlicher Hinsicht kostengünstige Herstellbarkeit des Gummilagers.

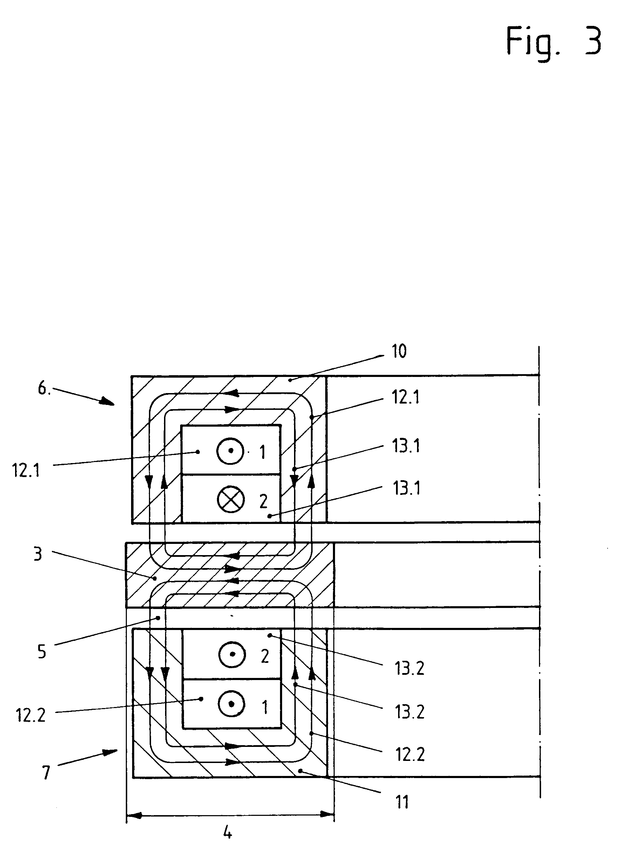

Um den gewünschten Umlaufsinn des magnetischen Flusses um die Nut zu erreichen, können a) die Gleichflüsse in den beiden Hubmagneten den gleichen Umlaufsinn haben, während die Wechselflüsse gegensinnig umlaufen; oder b) die Wechselflüsse umlaufen die Nute gleichsinnig, während die Gleichflüsse die Nut gegensinnig umlaufen. (Situation a) ist in Figur 3 dargestellt).

Nimmt man an, daß der Gleichfluß aufgrund der größeren, auf die Kompensationswand aufzubringenden statischen Kraft größer ist als der Wechselfluß, so ist es vorteilhaft, daß die Gleichflüsse in den beiden Hubmagneten den gleichen Umlaufsinn haben, während die Wechselflüsse gegensinnig umlaufen. Hierbei ist von Vorteil, daß die Kompensationswand vom größeren Flußanteil des Gleichflusses entlastet wird und die Platte dadurch leichter und weniger träge ausgeführt werden kann.

Bei gleichem Richtungssinn und untereinander vertauschten Anschlußklemmen kann es sich in fertigungstechnischer Hinsicht als sinnvoll erweisen, wenn die Gleich- und Wechselstromspulen aus bifilaren Drähten gewickelt sind. Die Begrenzung auf zwei Formspulen ermöglicht eine einfachere Montage des erfindungsgemäßen Gummilagers.

Eine weitere Vereinfachung hinsichtlich der Montage des Lagers und eine wirtschaftliche Produktion kann erreicht werden, wenn beide Hubmagneten, die durch die einander gegenüberliegende Gleich- und Wechselstromspulen in den jeweiligen Spulenträgern gebildet sind, baugleich ausgeführt sind. Die gleichgestalteten Spulen sind dann auch in gleichartig ausgestalteten Spulenträgern angeordnet, die gleiche Abmaße aufweisen. Durch diese Ausgestaltung läßt sich eine Kraftsymmetrie erreichen, die die Auslegung des Systems erleichtert und zu einem größtmöglichen Linearitätsbereich führt.

Durch entsprechende Ausgestaltung der Gleichstromspule kann diese vorteilhafterweise direkt an eine Gleichspannungsquelle angeschlossen werden. Die Gleichspannungsquelle ist beispielsweise durch eine Autobatterie gebildet, wobei das erfindungsgemäße Gummilager zur Schwingungsisolierung hochfrequenter Schwingungen zwischen der Karrosserie und der Verbrennungskraftmaschine und/oder dem Fahrwerk angeordnet sein kann.

Ausgezeichnete Gebrauchseigenschaften während einer langen Gebrauchsdauer können dadurch erreicht werden, daß die Kompensationswand von einer elastischen Federung gestützt ist und daß die Kompensationswand eine Trägheitsmasse aufweist, die sich mit der Steifigkeit der Federung zu einem schwingfähigen System ergänzt, mit einer Resonanzfrequenz, die oberhalb der Frequenz der zu isolierenden Schwingungen liegt. Durch diese unterkritische Abstimmung wird erreicht, daß Phasenverschiebungen zwischen der Auslenkung der Kompensationswand und dem Wechselstrom, der die Kompensationswand in ihrem Schwingungsverhalten beeinflußt, gering gehalten werden. Die Steuerung der Magnetspulen wird in regelungstechnischer Hinsicht durch diese Ausgestaltung wesentlich vereinfacht.

In seinem übrigen Aufbau kann das erfindungsgemäße Gummilager irgendeiner der bekannten Bauformen entsprechen, bei denen der Arbeitsraum beispielsweise durch eine Dämpfungsöffnung mit einem Ausgleichsraum verbunden ist.

Der Gegenstand der Erfindung wird nachfolgend anhand der als Anlage beigefügten Zeichnungen weiter verdeutlicht.

Es zeigen:
Figur 1 ein Ausgestaltungsbeispiel des erfindungsgemäßen Gummilagers in schematischer und geschnittener Darstellung,
Figur 2 eine weitere Ausgestaltung des erfindungsgemäßen Gummilagers,
Figur 3 einen Ausschnitt aus den Gummilagern gemäß der Figuren 1 und 2 im Bereich der einander gegenüberliegenden Magnetspulen und der in axialer Richtung dazwischen angeordneten Kompensationswand,
Figur 4 eine elektrische Reihenschaltung der beiden Gleich- und Wechselstromwicklungen, wobei die Gleich- und Wechselstromwicklungen gleichsinnig gewickelt und die Anschlußklemmen der Wechselstromwicklungen vertauscht sind.

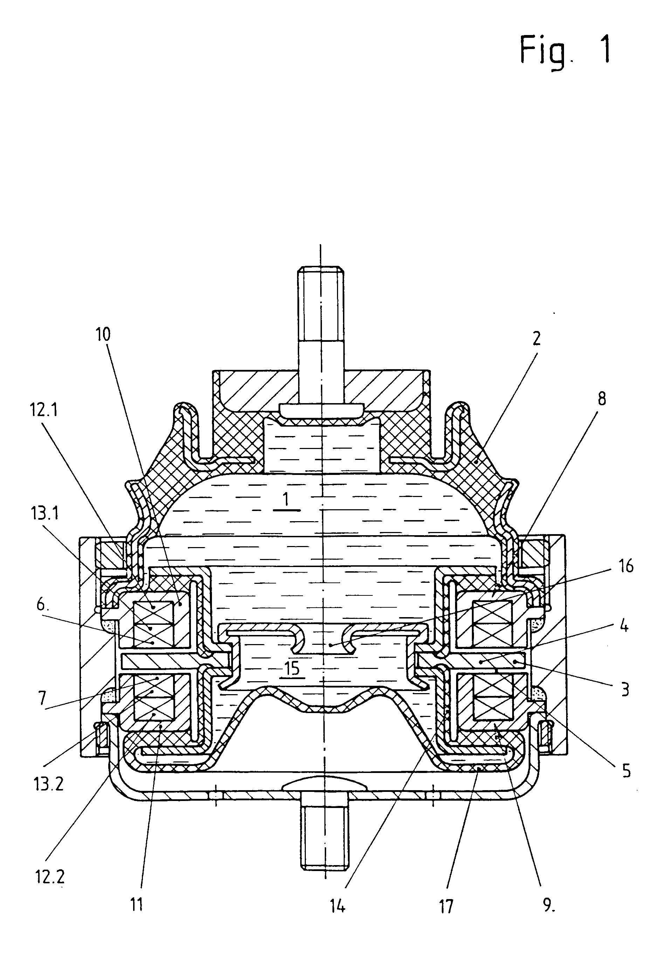

In Figur 1 ist ein Ausgestaltungsbeispiel des erfindungsgemäßen Gummilagers gezeigt, bei dem ein flüssigkeitsgefüllter Arbeitsraum 1 mit einem flüssigkeitsgefüllten Ausgleichsraum 15 über eine Verbindungsöffnung 16 flüssigkeitsleitend verbunden ist. Die Verbindungsöffnung 16 ist als Dämpfungsöffnung zur Dämpfung tieffrequenter Schwingungen mit großen Amplituden den Gegebenheiten eines Anwendungsfalles angepaßt. Anstelle der hier gezeigten, kreisförmigen Verbindungsöffnung 16 können auch, wie allgemein bekannt, kanalartige Verbindungsöffnungen vorgesehen sein, die innerhalb der Kompensationswand 3 angeordnet und durch diese begrenzt sind. Der Arbeitsraum 1 ist in axialer Richtung einerseits durch eine elastisch nachgiebige Blähfeder 2 und in axialer Richtung andererseits durch eine in axialer Richtung hin- und herbewegbare Kompensationswand 3 begrenzt. Zumindest im Bereich der Magnetspulen 6, 7 weist die Kompensationswand 3 einen Teilbereich 4 auf, der von ringförmiger Gestalt ist und aus einem weichmagnetischen Werkstoff besteht. Außerhalb dieser Teilbereiche kann die Kompensationswand 3, wie hier dargestellt, eine zentrale Durchbrechung aufweisen, in der ein weiteres Bauteil, das die Fortsetzung der Kompensationswand bildet, mit einer Verbindungsöffnung 16 angeordnet ist und beispielsweise aus polymerem Werkstoff besteht. Eine zumindest teilweise durch Kunststoff gebildete Kompensationswand 3 weist eine besonders geringe Trägheitsmasse auf, was im Hinblick auf gute Gebrauchseigenschaften bezüglich der Isolierung hochfrequenter Schwingungen von hervorzuhebender Bedeutung ist. Die einander gegenüberliegenden Magnetspulen 6, 7 sind als Hubmagneten ausgebildet und innerhalb in Richtung der Kompensationswand 3 geöffneten Nuten 8, 9 zweier Spulenträger 10, 11, die ebenfalls aus weichmagnetischem Werkstoff bestehen, angeordnet. Die Magnetspulen 6, 7 weisen, wie in dem Ausführungsbeispiel in Figur 3 gezeigt, jeweils eine Gleich- 12.1, 12.2 und eine Wechselstromspule 13.1, 13.2 auf, wobei die beiden Gleich- 12.1, 12.2 und die beiden Wechselstromspule 13.1, 13.2 jeweils in einer elektrischen Reihenschaltung zusammengefaßt sind. In diesen Ausführungsbeispielen sind die beiden Gleichstromwicklungen 12.1, 12.2 gleichsinnig von Strom durchflossen, während die beiden Wechselstromspule 13.1, 13.2 in entgegengesetzer Richtung stromdurchflossen sind.

Im Hinblick auf eine einfache und kostengünstige Herstellbarkeit des erfindungsgemäßen Gummilagers sind die einander gegenüberliegenden Gleich- 12.1, 12.2 und Wechselstromspulen 13.1, 13.2 untereinander gleich und daher in gleichartig gestalteten Spulenträgern 10, 11 angeordnet. Diese symmetrische Ausgestaltung ist in wirtschaftlicher Hinsicht von hervorzuhebender Bedeutung und führt zu einem größtmöglichen Linearitätsbereich.

Die Kompensationswand 3 ist im Spalt 5, zwischen den Magnetspulen 6, 7 in einer Mittellage durch eine elastische Federung 14 federnd abgestützt, wobei die Steifigkeit der Federung 14 so hoch angesetzt ist, daß sich zusammen mit der Trägheit der Kompensationswand 3 und des angrenzenden Fluids ein schwingfähiges System ergibt, dessen Resonanzfrequenz oberhalb des im bestimmungsgemäßen Betrieb zugänglichen Frequenzbereiches liegt. In diesem Ausführungsbeispiel ist die elastische Federung 14 durch eine einstückig mit der Ausgleichsmembran 17 ausgebildeten Feder aus elastomerem Werkstoff gebildet, die gleichzeitig eine zuverlässige Abdichtung von Arbeitsraum 1 und Ausgleichsraum 15 gegenüber der Steuereinheit mit den Magnetspulen 6, 7 ermöglicht. Zum Schutz der rollbalgartig ausgeführten, gummielastischen Ausgleichsmembran 17 und zur Befestigung des erfindungsgemäßen Gummilagers an einem angrenzenden Bauteil ist in axialer Richtung auf der dem Ausgleichsraum 15 abgewandten Seite der Ausgleichsmembran 17 ein Abschlußblech 18 vorgesehen, das Entlüftungsöffnungen enthält.

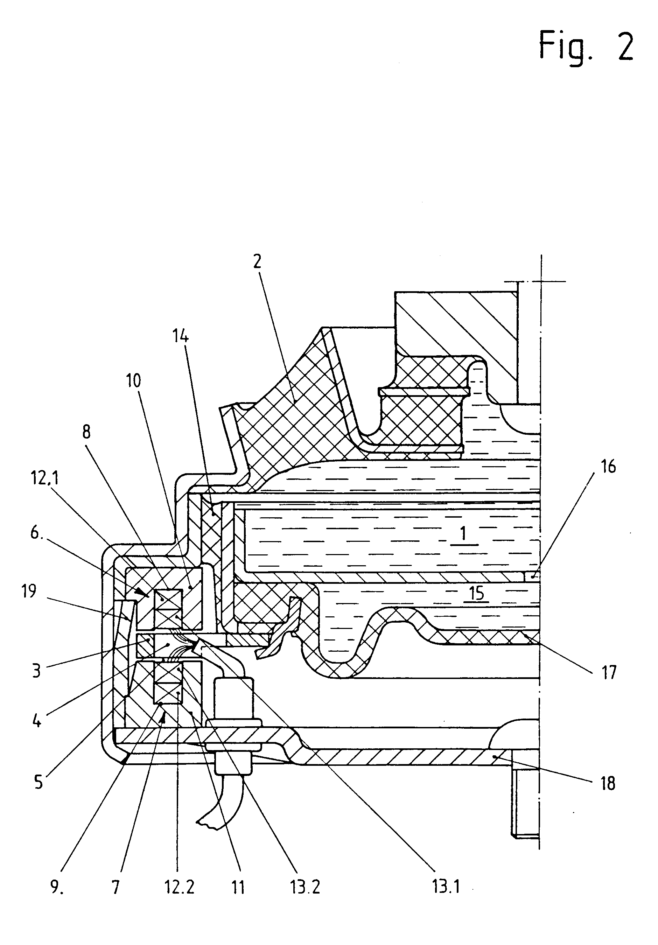

In Figur 2 ist eine andere, der Figur 1 ähnliche Ausgestaltung des erfindungsgemäßen Gummilagers gezeigt, bei der allerdings die elektrischen Anschlüsse zur Betätigung der Magnetspulen 6, 7 nicht radial von außen an die Spulen herangeführt werden, wie in Figur 1 gezeigt, sondern in axialer Richtung von unten durch das Abschlußblech 18. Die Kompensationswand 3 weist, wie hier dargestellt, zumindest ein Fenster zur Kabeldurchführung auf, so daß die Spulen mit Wechselstrom und Gleichstrom beaufschlagt werden können. Die Funktion des hier dargestellten Gummilagers entspricht weitgehend der Funktion des in Figur 1 beschriebenen Lagers. Als Besonderheit weist dieses Lager mehrere entlang des Umfangs angeordnete Laschen 19 auf, die die Magnetspule 6 fixieren.

In Figur 3 ist ein Ausschnitt aus den erfindungsgemäßen Gummilagern gemäß der Figuren 1 und 2 gezeigt. Die Kompensationswand 3, die im Teilbereich 4 von ringförmiger Gestalt ist und aus einem weichmagnetischen Werkstoff besteht, ist im Spalt 5 zwischen den Magneten angeordnet, wobei jeder der Magnete einen Hubmagnet bildet, der jeweils eine Gleichstromspule 12.1, 12.2 und eine Wechselstromspule 13.1, 13.2 umfaßt. Die beiden Gleich- 12.1, 12.2 und Wechselstromspule 13.1, 13.2 sind jeweils in einer elektrischen Reihenschaltung zusammengefaßt, wobei in diesem Beispiel die Wechselstromspule 13.1, 13.2 in entgegengesetzer Richtung vom Strom durchflossen sind. Die Durchströmungsrichtung ist in Figur 3 durch Symbole innerhalb der Wicklungen schematisch dargestellt. Punkt in Kreis bedeutet, daß der Strom die Wicklung aus der Zeichenebene heraus in Richtung des Betrachters durchfließt, während Kreuz in Kreis in entgegengesetzter Richtung stromdurchflossen ist, also vom Betrachter ausgehend durch die Zeichenebene hindurch.

In Figur 3 ist zu erkennen, daß sich die Gleich- 12.1, 12.2 und Wechselstromanteile 13.1, 13.2 des magnetischen Flusses auf der einen Seite in Spalt 5 verstärken, während sie sich auf der anderen Seite gegenseitig schwächen. Hierdurch eintsteht eine Nettokraft in Richtung des Magneten 7. Innerhalb der Kompensationswand 3 (Rückschlußplatte) kompensiert sich der radialgerichtete Gleichanteil des magnetischen Flusses. Die Gleichflüsse sind mit 12.1.1 und 12.2.2 bezeichnet und gleichsinnig stromdurchflossen, während die Wechselflüsse mit 13.1.1 und 13.2.2 bezeichnet und gegensinnig stromdurchflossen sind.

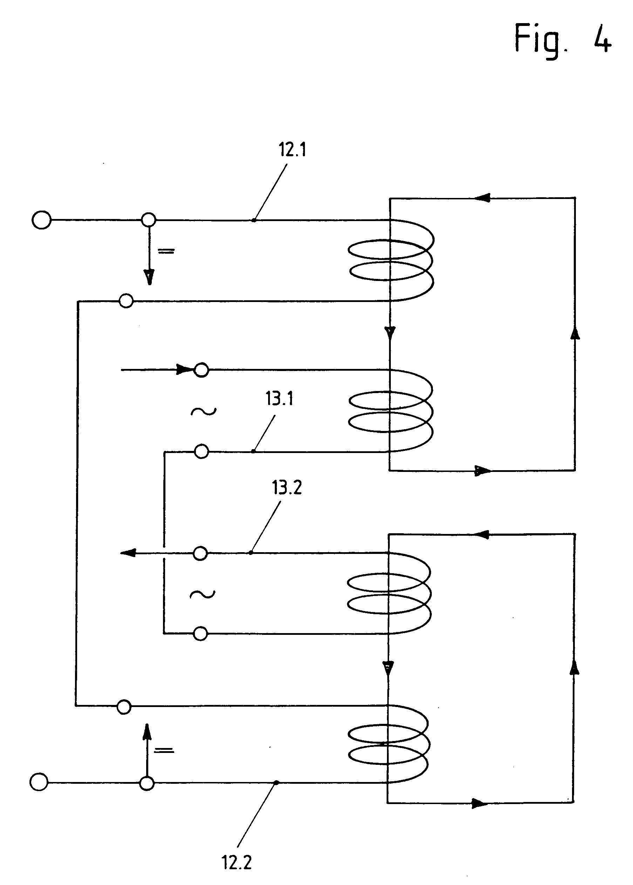

Figur 4 zeigt eine schematische Skizze, in der die beiden Gleich- und Wechselstromspulen 12.1, 12.2, 13.1, 13.2 jeweils in einer elektrischen Reihenschaltung zusammengefaßt sind. Die Wechselstromspulen 13.1, 13.2 sind gemäß der Figuren 1 bis 3 in entgegengesetzter Richtung stromdurchflossen. Als bevorzugtes Ausführungsbeispiel ist es vorgesehen, daß die Wechselstromspule 13.1, 13.2 gleichsinnig gewickelt sind und untereinander mit vertauschten Anschlußklemmen versehen sind. Diese Ausgestaltung bedingt, genau wie Wechselstromspulen, die gegensinnig gewickelt sind, einen Stromdurchfluß, der relativ entgegengesetzt zueinander erfolgt.

## Patentansprüche

1. Gummilager, bei dem ein flüssigkeitsgefüllter Arbeitsraum an zumindest einer Stelle seiner Wandung durch eine Blähfeder (2) und an zumindest einer anderen Stelle seiner Wandung durch eine in Richtung des Arbeitsraumes hin- und herbewegbare Kompensationswand (3) begrenzt ist, wobei die Kompensationswand (3) in einem Teilbereich von ringförmiger Gestalt ist, aus einem weichmagnetischen Werkstoff besteht und mit dem Teilbereich axial relativ beweglich in einen Spalt (5) zwischen axial einander gegenüberliegenden Magnetspulen (6, 7) hineinragt, die jeweils innerhalb in Richtung der Kompensationswand (3) geöffneten Nut einer in (8, 9) eines Spulenträgers (10, 11) aus weichmagnetischem Werkstoff angeordnet und die mit einer elektrischen Wechselspannung beaufschlagbar sind, dadurch gekennzeichnet, daß die Magnetspulen (6, 7) jeweils mit zumindest einem Gleich- und zumindest einem Wechselstrom beaufschlagbar sind und daß die axial einander gegenüberliegenden Magnetspulen (6, 7) entweder von den Gleichströmen oder von den Wechselströmen gegensinnig durchflossen sind.

2. Gummilager nach Anspruch 1, dadurch gekennzeichnet, daß die Magnetspulen (6, 7) jeweils eine Gleich- (12.1, 12.2) und eine Wechselstromspule (13.1., 13.2) umfassen und daß entweder die beiden Gleichstromspulen (12.1, 12.2) oder die beiden Wechselstromspulen (13.1, 13.2) gegensinnig vom Strom durchflossen sind.

3. Gummilager nach Anspruch 2, dadurch gekennzeichnet, daß die beiden Gleich- (12.1, 12.2) und Wechselstromspulen (13.1., 13.2) jeweils in einer elektrischen Reihenschaltung zusammengefaßt sind.

4. Gummilager nach Anspruch 2 bis 3, dadurch gekennzeichnet, daß die Gleich- (12.1, 12.2) und die Wechselspulen (13.1, 13.2) separat gewickelt sind.

5. Gummilager nach Anspruch 2 bis 4, dadurch gekennzeichnet, daß entweder die beiden Gleichstromspulen (12.1, 12.2) oder die beiden Wechselstromspulen (13.1, 13.2) zur Erzielung des entgegengesetzten Stromdurchflusses im entgegengesetzten Richtungssinn gewickelt sind.

6. Gummilager nach Anspruch 3 bis 5, dadurch gekennzeichnet, daß die Wechselstromspulen (13.1, 13.2) eine geringere Windungszahl aufweisen als die Gleichstromspulen (12.1, 12.2).

7. Gummilager nach Anspruch 2 bis 3, dadurch gekennzeichnet, daß entweder die beiden Gleich- (12.1, 12.2) oder die beiden Wechselstromspulen (13.1, 13.2) zur Erzielung des entgegengesetzten Stromdurchflusses mit untereinander vertauschten Anschlußklemmen versehen sind.

8. Gummilager nach Anspruch 7, dadurch gekennzeichnet, daß jeweils eine Gleich- (12.1, 12.2) und eine Wechselstromspule (13.1, 13.2) in einer bifilaren Wicklung zusammengefaßt sind.

9. Gummilager nach Anspruch 2 bis 8, dadurch gekennzeichnet, daß die einander gegenüberliegenden Gleich- (12.1, 12.2) und Wechselstromwicklungen (13.1, 13.2) untereinander gleich und in gleichartig gestalteten Spulenträgern (10., 11) angeordnet sind.

10. Gummilager nach Anspruch 2 bis 9, dadurch gekennzeichnet, daß die Gleichstromwicklungen (12.1, 12.2) direkt an eine Gleichstromquelle angeschlossen sind.

11. Gummilager nach Anspruch 2 bis 10, dadurch gekennzeichnet, daß die Kompensationswand (3) von einer elastischen Federung (14) gestützt ist und daß die Kompensationswand (3) eine Trägheitsmasse aufweist, die sich mit der Steifigkeit der Federung (14) zu einem schwingfähigen System ergänzt, mit einer Resonanzfrequenz, die oberhalb der Frequenz der zu isolierenden Schwingungen liegt.

## Claims

1. A rubber mounting, in which a liquid-filled operating space is bounded at at least one point on its wall by an expanding spring (12) and at at least one other point on its wall by a compensation wall (3) which can move in a reciprocating manner in the direction of the operating space, the compensation wall (3) being of annular shape in a subregion, being composed of a soft-magnetic material and having said subregion projecting in an axially relatively movable manner into a gap (5) between magnet coils (6, 7) which are axially opposite one another, are in each case arranged in a groove (8, 9), which is open in the direction of the compensation wall (3), of a coil former (10, 11) composed of soft-magnetic material and to which magnet coils (6, 7) electrical AC voltage can be applied, characterised in that the magnet coils (6, 7) in each case are able to have applied to them at least one direct current and at least one alternating current, and in that either the direct currents or the alternating currents flow in opposite directions through the magnet coils (6, 7) which are axially opposite one another.

2. A rubber mounting according to claim 1, characterised in that the magnet coils (6, 7) in each case comprise one direct-current coil (12.1, 12.2) and one alternating-current coil (13.1, 13.2), and in that current flows either through the two direct-current coils (12.1, 12.2) or the two alternating-current coils (13.1, 13.2) in opposite directions.

3. A rubber mounting according to claim 2, characterised in that the two direct-current coils (12.1, 12.2) and alternating-current coils (13.1, 13.2) are in each case combined in an electrical series circuit.

4. A rubber mounting according to either of claims 2 and 3, characterised in that the direct-current coils (12.1, 12,2) and the alternating-current coils (13.1, 13.2) are wound separately.

5. A rubber mounting according to any of claims 2 to 4, characterised in that either the two direct-current coils (12.1, 12.2) or the two alternating-current coils (13.1, 13.2) are wound in the opposite direction sense in order to produce the opposite current flow.

6. A rubber mounting according to any of claims 3 to 5, characterised in that the alternating-current coils (13.1, 13.2) have a smaller number of turns than the direct-current coils (12.1, 12.2).

7. A rubber mounting according to either of claims 2 and 3, characterised in that either the two direct-current coils (12.1, 12.2) or the two alternating-current coils (13.1, 13.2) are provided with mutually interchanged connection terminals in order to achieve the opposite current flow.

8. A rubber mounting according to claim 7, characterised in that one direct-current coil (12.1, 12.2) and one alternating-current coil (13.1, 13.2) are in each case combined in a bifilar winding.

9. A rubber mounting according to any of claims 2 to 8, characterised in that the mutually opposite direct-current windings (12.1, 12.2) and alternating-current windings (13.1, 13.2) are identical to one another and are arranged in coil formers (10, 11) of identical design.

10. A rubber mounting according to any of claims 2 to 9, characterised in that the direct-current windings (12.1, 12.2) are connected directly to a direct-current source.

11. A rubber mounting according to any of claims 2 to 10, characterised in that the compensation wall (3) is supported by elastic springing (14), and in that the compensation wall (3) has a mass inertia which is supplemented by the stiffness of the springing (14) to form an oscillating system having a resonant frequency which is above the frequency of the oscillations to be insulated.

## Revendications

1. Support élastique, dans lequel une chambre de travail remplie de liquide est délimitée, en au moins un endroit de sa paroi, par un ressort gonflable (2) et, en au moins un autre endroit de sa paroi, par une paroi de compensation (3) déplaçable alternativement en direction de la chambre de travail, la paroi de compensation (3) ayant une forme annulaire dans une zone partielle, étant constituée d'un matériau à magnétisme doux et pénétrant par la zone partielle, avec une mobilité axiale relative, dans un intervalle (5) existant entre des enroulements électro-magnétiques (6, 7), situés dans des positions axialement mutuellement opposées, sont disposés chacun à l'intérieur dans une rainure (8, 9), ouverte en direction de la paroi de compensation (3), d'un support d'enroulements (10, 11) formé d'un matériau à magnétisme doux et qui peuvent être sollicités par une tension électrique alternative, caractérisé en ce que les enroulements électro-magnétiques (6, 7) peuvent être chacun sollicités par au moins un courant continu et au moins un courant alternatif et en ce que les enroulements électro-magnétiques (6, 7), situés axialement dans des positions mutuellement opposées, sont parcourus dans des sens inverses soit par les courants continus, soit par les courants alternatifs.

2. Support élastique selon la revendication 1, caractérisé en ce que les enroulements électro-magnétiques (6, 7) comportent chacun un enroulement pour courant continu (12.1, 12.2) et un enroulement pour courant alternatif (13.1, 13.2) et en ce que soit les deux enroulements pour courant continu (12.1, 12.2), soit les deux enroulements pour courant alternatif (13.1, 13.2) sont parcourus par un courant dans des sens inverses.

3. Support élastique selon la revendication 2, caractérisé en ce que les deux enroulements pour courant continu (12.1, 12.2) et les deux enroulements pour courant alternatif (13.1, 13.2) sont chacun réunis sous la forme d'un circuit électrique-série.

4. Support élastique selon la revendication 2 ou 3, caractérisé en ce que les enroulements pour courant continu (12.1, 12.2) et les enroulements pour courant alternatif (13.1, 13.2) sont bobinés séparément.

5. Support élastique selon une des revendications 2 à 4, caractérisé en ce que soit les deux enroulements pour courant continu (12.1, 12.2), soit les deux enroulements pour courant alternatif (13.1, 13.2) sont bobinés dans des sens opposés en vue d'obtenir le passage de courant dans des sens opposés.

6. Support élastique selon une des revendications 3 à 5, caractérisé en ce que les enroulements pour courant alternatif (13.1, 13.2) comportent un nombre de spires qui est plus petit que celui des enroulements pour courant continu (12.1, 12.2).

7. Support élastique selon les revendications 2 et 3, caractérisé en ce que soit les deux enroulements pour courant continu (12.1, 12.2), soit les deux enroulements pour courant alternatif (13.1, 13.2), sont pourvus de bornes de raccordement mutuellement permutées en vue d'obtenir le passage de courant dans des sens opposés.

8. Support élastique selon la revendication 7 caractérisé en ce que respectivement un enroulement pour courant continu (12.1, 12.2) et un enroulement pour courant alternatif (13.1, 13.2) sont réunis sous la forme d'un enroulement bifilaire.

9. Support élastique selon une des revendications 2 à 8, caractérisé en ce que les enroulements pour courant continu (12.1, 12.2) et les enroulements pour courant alternatif (13.1, 13.2) situés dans des positions mutuellement opposées ont des structures identiques et sont disposés dans des supports d'enroulements (10, 11) de structures identiques.

10. Support élastique selon une des revendications 2 à 9, caractérisé en ce que les enroulements pour courant continu (12.1, 12.2) sont reliés directement à une source de courant continu.

11. Support élastique selon une des revendications 2 à 10, caractérisé en ce que la paroi de compensation (3) est soutenue par une suspension élastique (14) et en ce que cette paroi de compensation (3) a une masse d'inertie qui est combinée avec la raideur de la suspension (14) pour former un système capable d'oscillations et ayant une fréquence de résonance qui est supérieure à la fréquence des oscillations à isoler.
